# FASCICULE DE BREVET EUROPEEN

(11) **EP 4 267 500 B1**
(45) Date de publication et mention de la délivrance du brevet: **01.04.2026**
(21) Numéro de dépôt: 21848019.2
(22) Date de dépôt: 24.12.2021
(51) Int. Cl.: B65H 49/32, B29C 70/38

(54) **DISPOSITIF DE DÉVIDEMENT D'UNE MÈCHE D'UNE BOBINE**
VORRICHTUNG ZUM ABWICKELN EINES FADENS VON EINER SPULE
DEVICE FOR UNWINDING A THREAD FROM A SPOOL

(30) Priorité: 24.12.2020 FR 2014078
(43) Date de publication de la demande: 01.11.2023
(73) Titulaire: Commissariat à l'Energie Atomique et aux Energies Alternatives, 75015 Paris (FR)
(72) Inventeur: MAGNIER, Christophe, 37260 MONTS (FR); VILLALONGA, Stéphane, 37260 MONTS (FR)
(74) Mandataire: Ernest Gutmann - Yves Plasseraud S.A.S.
(86) Numéro de dépôt international: PCT/FR2021/052456
(87) Numéro de publication internationale: WO 2022/136811

(56) Documents cités:
- JP-A- S58 109 227
- US-A1- 2018 037 433

## Description

### Domaine technique

Le présent document concerne un dispositif de dévidement d'une mèche d'une bobine pour une installation d'enroulement filamentaire apte à réaliser un enroulement d'au moins une mèche d'une bobine autour d'un objet tel qu'un mandrin creux destiné à former un réservoir pouvant par exemple recevoir du fluide sous pression, tel que notamment de l'hydrogène gazeux.

### Technique antérieure

L'enroulement filamentaire est un procédé de mise en oeuvre par moulage de matériaux composites sous forme de pièces possédant un axe de révolution (cylindre, cône, etc.). Ce procédé est adapté aux productions massives et est utilisé principalement pour fabriquer des pièces soumises à de fortes contraintes mécaniques (réservoirs, tuyaux, etc.).

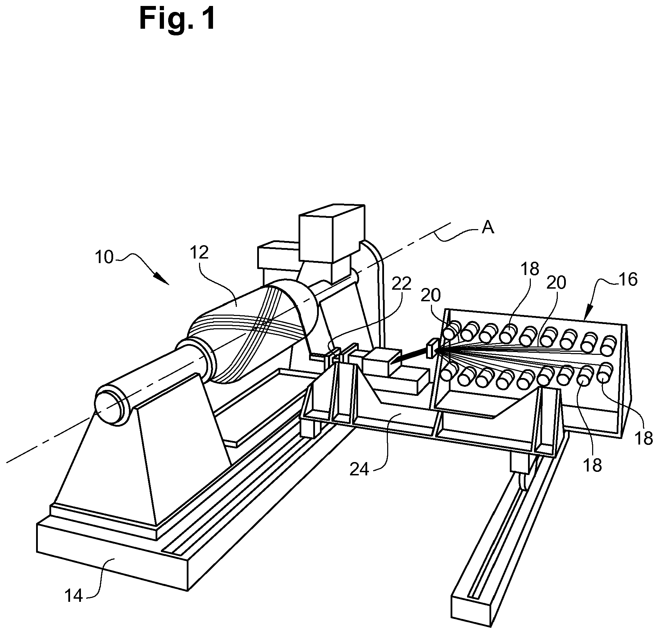

La figure 1 représente une installation 10 d'enroulement filamentaire, selon la technique connue, comprenant un mandrin 12 monté en rotation sur un bâti 14 et autour d'un axe longitudinal A sensiblement horizontal. L'installation 10 comprend un dévidoir 16 mobile en translation le long de l'axe longitudinal A et portant une pluralité de bobines 18 s'étendant sensiblement perpendiculairement à un panneau du dévidoir et sensiblement horizontalement. Chaque bobine 18 comprend une mèche 20, lesquelles sont rassemblées de manière jointive les unes à côté des autres au niveau d'une tête 22 de dépose de manière à former une nappe. La tête 22 de dépose est solidaire du dévidoir 16 par l'intermédiaire d'un chariot mobile 24 en translation le long de l'axe longitudinal A.

Dans certaines configurations (non représentées), la tête de dépose peut également se déplacer dans une direction transverse à l'axe du mandrin, tourner autour dudit axe transverse, pivoter autour de l'axe longitudinal, voire se déplacer sur l'axe vertical.

En préalable à la mise en route de l'installation d'enroulement filamentaire, la nappe est attachée au mandrin. Des tensionneurs du dévidoir sont activés pour mettre les fibres sous tension, limiter l'embuvage et compacter au mieux les couches successives déposées. Une couche est définie par un enroulement permettant de déposer la nappe sur l'ensemble de la surface du mandrin que l'on souhaite recouvrir. Il est possible de créer une couche de type hélicoïdal avec la nappe qui est déposée en constituant des hélices afin de recouvrir l'ensemble de la surface du cylindre et les zones souhaitées dans les fonds hémisphériques. Il est possible de faire une couche de type circonférentielle où la nappe est déposée quasi transversalement à l'axe du mandrin sur la totalité ou sur une partie de la zone cylindrique du mandrin.

La structuration par enroulement filamentaire permet d'empiler une succession de couches hélicoïdales et ou circonférentielles afin d'atteindre les performances mécaniques désirées de l'objet. En général, la machine est pilotée par une commande numérique. Cette commande numérique est souvent programmée par un opérateur utilisant des logiciels dédiés à l'enroulement filamentaire.

On connait des machines de dépose contact qui permettent la dépose de rubans de faible longueur sans risque de vrillage. Cependant, ces machines ne permettent pas une dépose et un maintien de fibre longue continue sous tension ou contrainte mécanique axiale dans le sens de la fibre qui soit imposée et régulée.

Les procédés connus de ce type sont l'ATL pour Automated Tape Layer et l'AFP pour Automated Fiber Placement.

Le procédé ATL utilise des rubans de grande largeur (généralement de 100 à 300 mm). Cette technique permet la dépose sur des surfaces à faible rayon de courbure et de grande dimension de type voilure d'avion civil. Le procédé AFP réalise une juxtaposition de ruban de moins de 10 mm de largeur et un assemblage en sortie de tête allant jusqu'à 32 rubans.

Les principales applications sont la réalisation de pièces planes ou à grand rayon de courbure. L'idée principale est de remplacer la main de l'homme pour la dépose de plis successifs avec des orientations de fibre définies.

Tous les systèmes actuels utilisent des rubans préimprégnés calibrés (fibre/résine) avec un film de séparation entre les couches sur la bobine de stockage. Ces rubans calibrés sont issus de nappes préimprégnées unidirectionnelles redécoupées avec le risque de découpe partielle du renfort sur les bords. Les coûts matière sont ici importants et il est nécessaire d'avoir un système d'enroulement du film de séparation lors des opérations de drapage.

Aucun de ces systèmes n'utilise de fibres préimprégnées standard, c'est-à-dire sans film de séparation entre les couches pour une mise en oeuvre par enroulement filamentaire. Il n'est pas possible d'appliquer une tension continue (ou contrainte) en traction (dans le sens de la fibre) sur les mèches puisque le ou les mèches constituant la nappe sont coupées à chaque extrémité de la pièce réalisée.

A ce jour les développements successifs dans le domaine de la mise en oeuvre des matériaux composites ce sont pour un volume important concentré sur l'automatisation des procédés. Ces développements sont poussés par les besoins importants exprimés dans les secteurs de l'automobile et de l'aéronautique. Le développement des technologies de stockage de l'hydrogène (par exemple à 700 bar de pression de service) avec l'augmentation de la capacité gravimétrique (c'est-à-dire le rapport entre la quantité d'hydrogène stockée et la masse du conteneur), pousse aux limites d'utilisation les matériaux composites.

Les procédés classiques d'enroulement filamentaire, (machines dédiées), et ceux plus robotisé (machines versatiles) n'ont jamais pris en compte la totalité de l'impact du procédé dans la perte de performance. Dans la plupart des cas le support des bobines se trouve éloigné de la tête de dépose et les mèches passent par un nombre important de renvois et de galets avant d'arriver à la tête de dépose.

Actuellement les systèmes de dévidement de mèches (à partir des bobines qui stockent la matière) sur les machines d'enroulement filamentaire sont réalisés sans tenir compte des effets du dévidement sur la géométrie et la performance mécanique de la mèche. La plupart des systèmes qu'ils soient mécanique (réglage figée de la tension appliquée à la mèche) par ressorts ou courroie ou électronique (réglage modulé de la tension appliquée à la mèche), sont de simples systèmes de dévidement de la mèche de la bobine. Or la mèche de chaque bobine est enroulée sur la tige de la bobine avec un angle de trancanage qui induit un déplacement de la mèche le long tige de la bobine. Lorsque l'organe de guidage en sortie de la bobine est une tige de renvoi, on comprend que la mèche se déplace le long de la tige. Lorsque l'organe de guidage en sortie de la bobine est un galet de renvoi, la mèche forme un angle oscillant autour de la valeur 90°. Dans l'un et l'autre des cas, le mouvement de la mèche relativement à l'organe de renvoi est susceptible de vriller la mèche pouvant conduire à des défauts de fabrication lors de la dépose de la mèche sur le mandrin.

Ce problème est encore accru lorsque la mèche de la bobine est préimprégnée d'une matrice partiellement polymérisée durcissable telle qu'une matrice thermodurcissable ou une matrice thermoplastique. En effet, la pégosité limite grandement, voire rend impossible les glissements de la mèche, ce qui empêche tout mouvement permettant de limiter la formation d'une vrille lorsque celle-ci est initiée.

Pour limiter la formation de vrilles, il est connu d'éloigner les bobines des organes de renvois et donc de la tête de dépose, ce qui pose un problème d'emprise au sol de la machine d'enroulement filamentaire.

Les documents US 2018/037433 A1 et JP S58 109227 A divulguent un dispositif de dévidement selon le préambule de la revendication 1.

### Résumé

Il est proposé un dispositif de dévidement d'une mèche d'une bobine comprenant :
- un plateau portant au moins un porte-bobine s'étendant selon une axe sensiblement perpendiculaire au plateau et destiné à recevoir une bobine apte à tourner autour dudit axe du porte-bobine ;
- des moyens de déplacement en translation de la bobine selon l'axe du porte-bobine
- des moyens de pilotage des moyens de déplacement configurés pour permettre un maintien de la mèche de sortie de la bobine à une position axiale sensiblement constante, c'est-à-dire le long de l'axe du porte-bobine.

Le pilotage du déplacement de la bobine permet conserver la géométrie de la mèche de la bobine qui est dévidée. On comprend que la position axiale de la bobine n'est pas strictement constante au sens mathématique du terme mais est maintenue sensiblement constante de sorte que sa position apparait constante et empêche la formation de vrilles.

La bobine peut être une bobine de mèche formées d'une pluralité de fibres ou filaments de renforcement. Les fibres peuvent être des fibres de carbone.

Les moyens de déplacement peuvent comprendre des moyens de guidage en translation d'une pièce de liaison selon un axe parallèle à l'axe du porte-bobine, cette pièce de liaison étant reliée à un support de bobine entourant le porte-bobine, le support de bobine étant couplé en rotation au porte-bobine et libre en translation le long du porte-bobine.

La pièce de liaison peut être reliée en rotation autour de l'axe longitudinal au support de bobine et être solidaire en translation le long dudit axe dudit support de bobine.

Selon une autre caractéristique, les moyens de guidage peuvent comprendre au moins une tige sensiblement perpendiculaire au plateau et dans laquelle est guidée en coulissement la pièce de liaison.

Les moyens de déplacement peuvent comprendre un moteur couplé en rotation par une courroie à une vis sans fin entrainant en translation la pièce de liaison.

Le porte bobine peut être monté rotatif relativement à la pièce de liaison.

Un palier de roulement peut être monté à la jonction du support de bobine et de la pièce de liaison.

Le porte-bobine comprend des roulements à billes pour le déplacement en translation du support de bobine.

Le porte-bobine peut être monté en rotation sur le plateau.

Les moyens de pilotage peuvent comprendre des moyens de détection de la position axiale de la mèche de sortie de la bobine.

Les moyens de détection peuvent comprendre deux capteurs de position, par exemple de type optiques ou autres, espacés axialement l'un de l'autre et configurés pour détecter le passage de la mèche.

Installation d'enroulement d'au moins une mèche d'une bobine au moyen d'un dispositif selon l'une des revendications précédentes.

### Brève description des dessins

D'autres caractéristiques, détails et avantages apparaîtront à la lecture de la description détaillée ci-après, et à l'analyse des dessins annexés, sur lesquels :
[Fig. 1] la figure 1, déjà décrite précédemment, est une vue schématique en perspective d'une installation d'enroulement filamentaire selon la technique antérieure ;
[Fig. 2] la figure 2 et
[Fig. 3] la figure 3 sont des vues schématiques en perspective selon deux orientations différentes d'un dispositif selon le présent document ;
[Fig. 4] la figure 4 est une vue schématique en perspective du porte-bobine avec un agrandissement en partie droite de la partie encadrée en pointillés ;
[Fig. 5] la figure 5 est une schématique en perspective d'un porte bobine et d'un support de bobine entourant le porte-bobine ;
[Fig. 6] la figure 6 est une vue schématique similaire à celle de la figure 5 dans laquelle le support de bobine a été retiré ;
[Fig. 7] la figure 7 est une vue schématique en perspective du porte-bobine avec un agrandissement en partie droite de la partie encadrée en pointillés, une coupe partielle étant réalisée pour montrer la liaison entre la pièce de liaison et le support de bobine ;
[Fig. 8] la figure 8, est une vue schématique en perspective d'un dispositif de dévidement d'une bobine monté sur un porte-bobine lequel est dans une première position en figure 8A et dans une seconde position 8B.

### Description des modes de réalisation

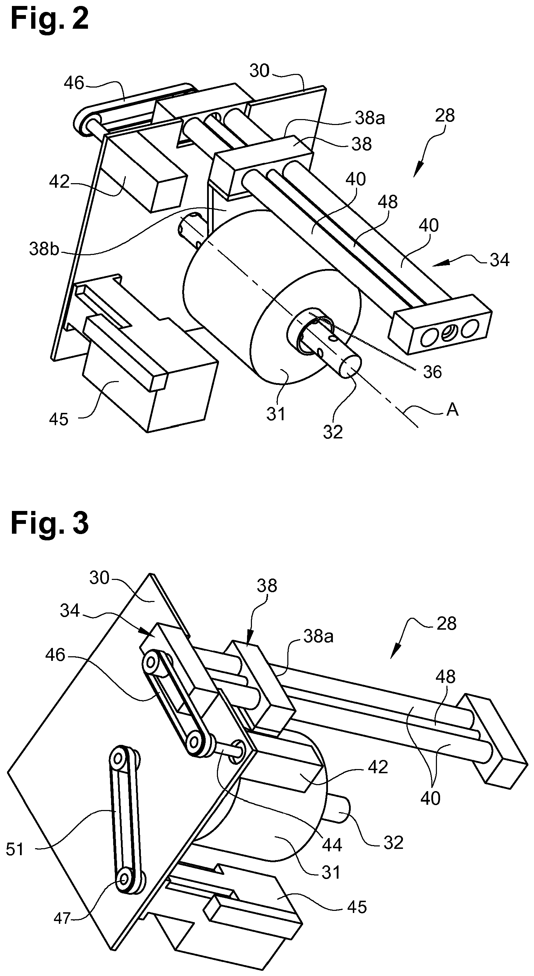

On se réfère maintenant à la figure 2 qui représente un dispositif 28 se dévidement selon le présent document et qui comprend un plateau 30. On observe qu'une bobine 31 est portée par le plateau 30 et d'un côté qui est opposé à celui destiné à supporter une tête de dépose (non représentée).

Le plateau 30 comprend ainsi une bobine 31 mais pourrait en porter plusieurs. Le ou les bobines 31 s'étendent suivant un axe A longitudinal qui peut être parallèle à l'axe longitudinal de la tête de dépose. Il sera maintenant fait référence à une seule bobine 31 bien que le plateau 32 puisse en comprendre plusieurs.

Le dispositif 28 comprend un porte-bobine 32 entouré par un support 36 de bobine 31, la bobine 31 étant montée solidaire en rotation du support 36 de bobine 31, par exemple par un montage serré ou tout autre montage adapté. Le porte-bobine 32 et le support 36 de bobine sont coaxiaux suivant un axe A sensiblement perpendiculaire au plateau 30.

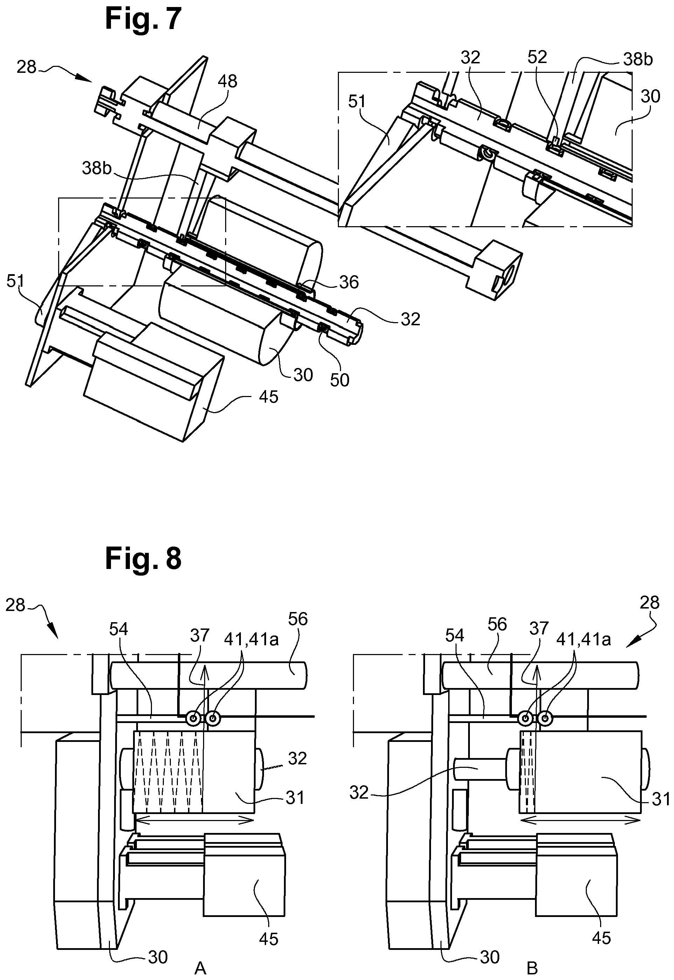

Le dispositif 28 comprend des moyens 34 de déplacement en translation de la bobine 31 selon l'axe A du porte-bobine 32 et des moyens 41 de pilotage des moyens de déplacement configurés pour permettre un maintien de la mèche 37 (figure 8) de la bobine 31 à une position axiale sensiblement constante.

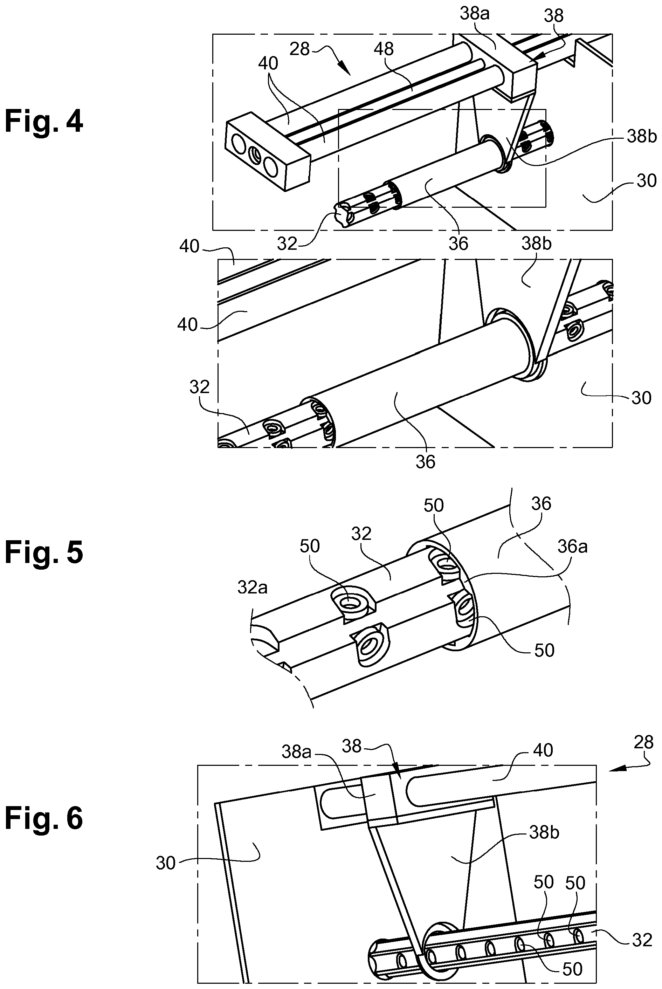

Les moyens de déplacement 34 comprennent des moyens de guidage en translation d'une pièce de liaison 38 reliée au support 36 de bobine 31. Cette pièce 38 de liaison comporte une partie supérieure 38a de glissement en translation traversée par deux rails 40 ou tiges de guidage parallèles à l'axe longitudinal A du porte-bobine 32. La partie supérieure 38a est apte à coulisser sur les deux rails 40. La partie supérieure 38a de la pièce de liaison 38 est reliée à une équerre 38b dont l'extrémité opposée à la partie supérieure 38a est reliée en rotation au support 36 de bobine 31 et est solidaire en translation le long dudit axe A dudit support 36 de bobine 31 comme cela apparaitra mieux en relation avec les figures 4 à 7. Les moyens de déplacement 34 comprennent un moteur 42 dont l'arbre 44 de sortie est couplé en rotation par une courroie 46 à une vis 48 sans fin entrainant en translation la pièce 38 de liaison. Plus particulièrement, la vis 48 sans fin traverse la partie supérieure 38a de la pièce 38 de liaison et est couplé en rotation à celle-ci par l'intermédiaire d'un filetage de manière à ce que la rotation de la vis 48 entraine le déplacement en translation selon l'axe longitudinal A de la pièce 38 de liaison et par suite du support 36 de bobine 31 et donc de la bobine 31.

Sur la figure 3, on observe la présence d'un moteur 45 destiné à générer une tension dans la mèche 37 de la bobine 31. L'arbre 47 de sortie de ce moteur 45 est couplé au porte-bobine 32 par une courroie 51. Un tensionneur pourrait être utilisé pour tendre la courroie 46 et/ou la courroie 51.

On se réfère maintenant aux figures 4, 5 et 6 qui illustrent le support 36 de bobine 31 accouplé en translation à l'équerre 38b de la pièce de liaison. Le support 36 de bobine 31 est monté en translation suivant l'axe A longitudinal sur le porte-bobine 32 et est apte à coulisser suivant ledit axe A longitudinal sur le porte-bobine 32. Le support 36 de bobine 30 est accouplé en rotation au porte-bobine 32 par l'intermédiaire de forme correspondante. Plus spécifiquement, la face interne du support 36 de bobine 31 comprend des nervures 36a longitudinales engagées dans des rainures 32a longitudinales du porte-bobine 32. Le porte-bobine 32 comprend des roulements à billes 50 pour le déplacement en translation du support 36 de bobine 31 sur le porte-bobine 32. De cette manière, le porte-bobine 32 est relié en rotation au support 36 de bobine qui porte la bobine 31 et le support 36 de bobine 31 peut coulisser sur le porte-bobine 32.

Afin de garantir une rotation du support 36 de bobine 31 relativement à la pièce 38 de liaison qui est fixe en rotation, un palier est formé à la jonction annulaire de l'équerre 38b et du support 36 de bobine 31. Ce palier peut être formé par un rebord annulaire 52 du support 36 de bobine 31 qui est monté dans une gorge annulaire de l'équerre 38b. Il peut ainsi s'agir d'un palier lisse. Il serait également possible de réaliser une liaison par un palier de roulement avec une bague externe solidaire de l'équerre 38b et avec une bague interne solidaire du support 36 de bobine 31 (figure 7).

Afin d'assurer un pilotage du moteur 42 de déplacement en translation du support 36 de bobine 31, les moyens de pilotage 41 comprennent des moyens de détection 41a de la position axiale de la mèche 37 de sortie de la bobine 31, ces moyens de détection comprenant par exemple deux capteurs 41a optiques de position espacés longitudinalement l'un de l'autre et configurés pour détecter le passage de la mèche 37. Ces capteurs optiques 41a peuvent être portés par une tige 54 parallèle à l'axe longitudinal A (figure 8).

La figure 8 illustre deux positions le long de l'axe A de la bobine 30 et donc du support 36 de bobine 30. On observe qu'avec le dispositif 28 selon le présent document, la mèche 37 sort toujours de la bobine 31 selon une direction sensiblement perpendiculaire à l'axe de la bobine. La position de la mèche suivant l'axe longitudinale reste constante, ce qui permet d'utiliser un galet de renvoi ou une tige de renvoi 56 sans risque de formation de vrille.

## Revendications

1. Dispositif de dévidement (28) d'une mèche d'une bobine (31) comprenant :
- un plateau (30) portant au moins un porte-bobine (32) s'étendant selon une axe (A) sensiblement perpendiculaire au plateau (30) et destiné à recevoir une bobine (31) apte à tourner autour dudit axe du porte-bobine (32) ;
- des moyens de déplacement (34) en translation de la bobine selon l'axe du porte-bobine (32) ;
- des moyens de pilotage (41) des moyens de déplacement (34) configurés pour permettre un maintien de la mèche (37) de sortie de la bobine (31) à une position sensiblement constante le long de l'axe (A) du porte-bobine (32),
dans lequel les moyens de déplacement (34) comprennent des moyens de guidage en translation d'une pièce de liaison (38) selon un axe parallèle à l'axe du porte-bobine (32), **caractérisé en ce que** cette pièce (38) de liaison est reliée à un support (36) de bobine entourant le porte-bobine, le support (36) de bobine étant couplé en rotation au porte-bobine (32) et libre en translation le long du porte-bobine (32).

2. Dispositif selon la revendication 1, dans lequel la pièce (38) de liaison est reliée en rotation autour de l'axe longitudinal (A) au support (36) de bobine et est solidaire en translation le long dudit axe (A) dudit support (36) de bobine.

3. Dispositif selon la revendication 1 ou 2, dans lequel les moyens de guidage comprennent au moins une tige (40) sensiblement perpendiculaire au plateau (30) et dans laquelle est guidée en coulissement la pièce (38) de liaison.

4. Dispositif selon l'une des revendications 1 à 3, dans lequel les moyens de déplacement (34) comprennent un moteur (42) couplé en rotation par une courroie (46) à une vis (48) sans fin entrainant en translation la pièce (38) de liaison.

5. Dispositif selon l'une des revendications 1 à 4, dans lequel le porte-bobine (32) est monté rotatif relativement à la pièce (38) de liaison.

6. Dispositif selon la revendication 5, dans lequel un palier de roulement est monté à la jonction du support (36) de bobine et de la pièce (38) de liaison.

7. Dispositif selon l'une des revendications 1 à 6, dans lequel le porte-bobine (32) comprend des roulements à billes pour le déplacement en translation du support (36) de bobine.

8. Dispositif selon l'une des revendications précédentes, dans lequel le porte-bobine (32) est monté en rotation sur le plateau (30).

9. Dispositif selon l'une des revendications précédentes, dans lequel les moyens de pilotage (41) comprennent des moyens de détection (41a) de la position axiale de la mèche (37) de sortie de la bobine (31).

10. Dispositif selon la revendication 9, dans lequel les moyens de détection (41a) comprennent deux capteurs de position, par exemple optiques, espacés axialement l'un de l'autre et configurés pour détecter le passage de la mèche (37).

11. Installation d'enroulement d'au moins une mèche d'une bobine au moyen d'un dispositif selon l'une des revendications précédentes.

## Patentansprüche

1. Vorrichtung (28) zum Abwickeln eines Rovings von einer Spule (31), umfassend:
- eine Grundplatte (30), die zumindest einen Spulenhalter (32) trägt, der sich entlang einer zur Grundplatte (30) im Wesentlichen senkrechten Achse (A) erstreckt und zur Aufnahme einer Spule (31) dient, die um die Achse des Spulenhalters (32) drehbar ist;
- eine Verschiebeeinrichtung (34) zum Verschieben der Spule entlang der Achse des Spulenhalters (32);
- eine Steuereinrichtung (41) zum Ansteuern der Verschiebeeinrichtung (34), die so ausgelegt ist, dass der Roving (37) am Austritt aus der Spule (31) in einer im Wesentlichen konstanten Position entlang der Achse (A) des Spulenhalters (32) gehalten werden kann,
wobei die Verschiebeeinrichtung (34) eine Führungseinrichtung zum translatorischen Führen eines Verbindungsteils (38) entlang einer zur Achse des Spulenhalters (32) parallelen Achse umfasst,
**dadurch gekennzeichnet, dass**
dieses Verbindungsteil (38) mit einem den Spulenhalter umgebenden Spulenträger (36) verbunden ist, wobei der Spulenträger (36) mit dem Spulenhalter (32) drehgekoppelt ist und sich entlang des Spulenhalters (32) frei verschieben lässt.

2. Vorrichtung nach Anspruch 1,
wobei das Verbindungsteil (38) um die Längsachse (A) drehbar mit dem Spulenträger (36) verbunden ist und entlang der Achse (A) verschiebefest mit dem Spulenträger (36) verbunden ist.

3. Vorrichtung nach Anspruch 1 oder 2,
wobei die Führungseinrichtung zumindest eine Stange (40) umfasst, die im Wesentlichen senkrecht zur Grundplatte (30) verläuft und in der das Verbindungsteil (38) verschiebbar geführt ist.

4. Vorrichtung nach einem der Ansprüche 1 bis 3,
wobei die Verschiebeeinrichtung (34) einen Motor (42) umfasst, der über einen Riemen (46) mit einem Schneckentrieb (48) drehgekoppelt ist, der das Verbindungsteil (38) zur Verschiebebewegung antreibt.

5. Vorrichtung nach einem der Ansprüche 1 bis 4,
wobei der Spulenhalter (32) relativ zum Verbindungsteil (38) drehbar gelagert ist.

6. Vorrichtung nach Anspruch 5,
wobei an der Verbindungsstelle zwischen dem Spulenhalter (36) und dem Verbindungsteil (38) ein Wälzlager angebracht ist.

7. Vorrichtung nach einem der Ansprüche 1 bis 6,
wobei der Spulenhalter (32) Kugellager für die Verschiebebewegung des Spulenträgers (36) umfasst.

8. Vorrichtung nach einem der vorstehenden Ansprüche,
wobei der Spulenhalter (32) drehbar an der Grundplatte (30) gelagert ist.

9. Vorrichtung nach einem der vorstehenden Ansprüche,
wobei die Steuereinrichtung (41) eine Erfassungseinrichtung (41a) zum Erfassen der axialen Position des Rovings (37) am Austritt aus der Spule (31) umfasst.

10. Vorrichtung nach Anspruch 9,
wobei die Erfassungseinrichtung (41a) zwei beispielsweise optische Positionssensoren umfasst, die axial voneinander beabstandet und dazu ausgelegt sind, den Durchtritt des Rovings (37) zu erfassen.

11. Anlage zum Aufwickeln zumindest eines Rovings von einer Spule mittels einer Vorrichtung nach einem der vorstehenden Ansprüche.

## Claims

1. A device (28) for unwinding a strand from a bobbin (31) comprising:
- a plate (30) supporting at least one bobbin holder (32) extending according to an axis (A) substantially perpendicular to the plate (30) and intended to receive a bobbin (31) able to rotate around said axis of the bobbin holder (32);
- movement means (34) for translationally moving the bobbin according to the axis of the bobbin holder (32);
- control means (41) for controlling the movement means (34) configured to enable maintenance of the strand (37) leaving the bobbin (31) at a substantially constant position along the axis (A) of the bobbin holder (32),
wherein the movement means (34) comprise guide means for guiding a connecting part (38) in translation according to an axis parallel to the axis of the bobbin holder (32), **characterized in that** this connecting part (38) is connected to a bobbin support (36) surrounding the bobbin holder, the bobbin support (36) being coupled in rotation to the bobbin-holder (32) and free to translate along the bobbin holder (32).

2. The device according to claim 1, wherein the connecting part (38) is connected in rotation about the longitudinal axis (A) to the bobbin support (36) and is secured in translation along said axis (A) with said bobbin holder (36).

3. The device according to claim 1 or 2, wherein the guide means comprise at least one rod (40) substantially perpendicular to the plate (30) and in which the connecting part (38) is slidably guided.

4. The device according to one of claims 1 to 3, wherein the movement means (34) comprise a motor (42) coupled in rotation by a belt (46) to a worm screw (48) driving the connecting part (38) in translation.

5. The device according to one of claims 1 to 4, wherein the bobbin holder (32) is rotatably mounted relative to the connecting part (38).

6. The device according to claim 5, wherein a roller bearing is mounted at the junction of the bobbin support (36) and the connecting part (38).

7. The device according to one of claims 1 to 6, wherein the bobbin holder (32) comprises ball bearings for the translational movement of the bobbin holder (36).

8. The device according to one of the preceding claims, wherein the bobbin holder (32) is rotatably mounted on the plate (30).

9. 16. The device according to one of the preceding claims, wherein the control means (41) comprise means (41a) for detecting the axial position of the strand (37) leaving the bobbin (31).

10. 18. The device according to claim 9, wherein the detection means (41a) comprise two position sensors, for example optical, spaced axially apart from each other and configured to detect the passage of the strand (37).

11. 20. A unit for winding at least one strand of a bobbin by means of a device according to one of the preceding claims.
